# EUROPEAN PATENT SPECIFICATION

(11) **EP 3 220 027 B1**
(45) Date of publication and mention of the grant of the patent: **17.07.2019**
(21) Application number: 15859575.1
(22) Date of filing: 05.11.2015
(51) Int. Cl.: F16K 31/06, F16H 61/00, H01F 7/128, H01F 7/16, F16K 27/04, F16K 11/07

(54) **SOLENOID VALVE DEVICE**
MAGNETVENTILVORRICHTUNG
DISPOSITIF D'ÉLECTROVANNE

(30) Priority: 13.11.2014 JP 2014231062
(43) Date of publication of application: 20.09.2017
(73) Proprietor: Eagle Industry Co., Ltd., Minato-ku Tokyo 105-8587 (JP)
(72) Inventor: IWANAGA Hiroyuki, Tokyo 105-8587 (JP); OKAMOTO Eiji, Tokyo 105-8587 (JP); KASAGI Yoshinari, Tokyo 105-8587 (JP)
(74) Representative: WSL Patentanwälte Partnerschaft mbB
(86) International application number: PCT/JP2015/081139
(87) International publication number: WO 2016/076188

(56) References cited:
- EP-A1- 2 495 482
- EP-A2- 0 939 259
- WO-A1-2011/052371
- JP-A- 2009 063 022
- JP-A- 2009 063 022
- JP-U- H0 281 982
- US-A- 4 809 749
- US-A- 4 971 114
- US-A1- 2008 083 896

## Description

### {TECHNICAL FIELD}

The present invention relates to a solenoid valve device, and particularly relates to a solenoid valve device suitable for use in the hydraulic control of a hydraulic circuit.

### {BACKGROUND ART}

As a conventional solenoid valve device for hydraulic control, there is known one including a valve portion and a solenoid portion. The valve portion has a spool housed in a sleeve, and the solenoid portion has a solenoid case with a molded solenoid component housed therein. In the molded solenoid component, an armature and a solenoid, which drive the spool in an axial direction, are covered with a resin. This conventional solenoid valve device is disposed between a pressure source, such as a pump or an accumulator, and a load. The spool is driven to supply control oil at regulated pressure and flow rate to the load.

The drive stroke of the spool is relatively great. Thus, when the solenoid portion is energized, a problem may arise in that fluid in a space, in which the armature is housed, acts as a resistance to inhibit quick movement of the armature. In order to cope with the resistance of the fluid, a breathing hole in provided extending in a radial direction through the spool, in which the solenoid is housed, and communicating with the outside. When the armature is driven, the fluid in the space with the armature housed therein is released to the outside through the breathing hole, thereby reducing the resistance of the fluid. As a result, the armature can quickly move.

The aforementioned solenoid valve device can quickly move the armature. However, the distance between the space with the armature housed therein and the outside is short, and for this reason, there is a problem that fluid flows in/out through the breathing hole along with driving of the armature, and accordingly, contaminants penetrate into the space with the armature housed therein. Thus, it has been proposed to provide a long breathing channel, which is in communication with a space with an armature housed therein, in a solenoid case so that less contaminants would be allowed to penetrate into the space with the armature housed therein (see, for example, Patent Citation 1).

US 4,971,114 A is directed to an electromagnetic proportional pressure control valve, which includes a housing, and a spool slidably received in the housing. The spool has a pair of first and second pressure receiving portions which are equal to each other in effective pressure receiving area. A primary pressure in a primary port is applied to the first pressure receiving portion, and a secondary pressure in a secondary port is applied to the second pressure receiving portion. A form due to the primary pressure acts on the spool in a direction to increase the secondary pressure, and a force due to the secondary pressure acts on the spool in a direction to decrease the secondary pressure. A force of a spring and a force of an electromagnetic actuator also act on the spool in the opposite directions. A variation in the primary pressure directly appears in the secondary pressure.

US 4,809,749 A is directed to a solenoid valve in which the displacement of a spool slidably contained within a valve bore of a valve body is controlled by means of the displacement of a plunger slidably contained within a plunger chamber, one end of the valve bore communicating with the plunger chamber being blocked, the valve body being provided therein with an oil reservoir chamber communicating with the valve bore, and the oil reservoir chamber being communicated with the plunger chamber.

### {CITATION LIST}

### {Patent Literature}

Patent Citation 1: International Patent Publication No. 2011/052371 (paragraphs 0073 to 0090 and FIG. 3), also published as EP 2 495 482 A1.
Patent Citation 2: United States Patent Publication No. 4,971,114 A
Patent Citation 3: United States Patent Publication No. 4,809,749 A

### {SUMMARY OF INVENTION}

### {Technical Problem}

However, the solenoid valve device of Patent Citation 1 has the following structure: a solenoid valve unit is fitted into an attachment hole of a valve housing such that the valve housing and the solenoid case of the solenoid valve unit remain in contact with each other, whereby the breathing hole is not exposed directly to the outside to provide a longer distance between the space with the armature housed therein and the outside. When such a structure is adopted, the formation of the long breathing channel can reduce the penetration of contaminants into the space with the armature housed therein. However, the solenoid valve device is in such a state that the solenoid valve unit is directly fitted into the attachment hole of the valve housing and the valve housing and the solenoid case of the solenoid valve unit are in a surface contact. Thus, due to vibrations associated with reciprocations of the armature, vibrations of a target attachment such as a vehicle on which the solenoid valve device is placed, and like vibrations, the above-described surface contact becomes insufficient. For this reason, there remains the potential problem that fluid with contaminants contained therein may penetrate into the space with the armature housed therein through between the valve housing and the solenoid case.

The present invention has been made in view of the above-described problems, and has as an object thereof the provision of a solenoid valve device that can quickly move an armature and can more reliably inhibit the penetration of contaminants.

### {Solution to Problems}

In order to solve the above-describe problems, a solenoid valve device of the present invention includes a solenoid valve unit including a spool, a sleeve configured such that the spool is internally disposed movably in an axial direction, a valve portion movable by the spool, an armature configured to move the spool, a molded solenoid component disposed around an outer periphery of the armature and having a solenoid portion disposed therein, and a solenoid case with the armature and the molded solenoid component housed therein; and a valve housing provided with an attachment hole into which the sleeve of the solenoid valve unit is inserted. The solenoid valve unit comprises: a breathing hole extending in a radial direction through the sleeve on a side of the solenoid portion and bringing a space, which is formed between the armature and the spool when the armature is at least in a predetermined region, into communicate with the outside; a first opening facing a side of the valve portion and opening to the outside; a second opening opening to the outside; and a breathing channel in the solenoid case, said breathing channel communicating at an end thereof with the first opening and communicating at an opposite end thereof with the second opening. The solenoid valve device is characterized by the solenoid valve unit and the valve housing being fixed together with an annular seal interposed around the sleeve so that a passage between the breathing hole and the first opening of the solenoid valve unit is ensured and a passage between the breathing hole and the outside is cut off.

According to such features, since the first opening and the breathing hole are sealed from the outside by the annular seal. Therefore, the space formed between the armature and the spool communicates with the breathing channel through the breathing hole. When the armature moves, it is ensured that fluid in the space moves to the outside through the breathing channel and the second opening. Thus, fluid resistance is small, and the armature can quickly move. Further, since the annular seal is disposed to surround the sleeve, the pressure of contact per unit area between the annular seal and each of the solenoid valve unit and the valve housing can be maintained at a high level, and moreover, high restoring force can be obtained. Even if vibrations occur due to, for example, movements of the armature, a clearance may hardly develop between the solenoid valve unit and the valve housing. This inhibits the penetration of fluid with contaminants contained therein into the space formed between the armature and the spool.

The solenoid valve device is further characterized in that the annular seal is an annular member having an inner diameter greater than the outer diameter of the sleeve and having an inner diameter greater than that of the attachment hole of the valve housing.

According to such features, the space having a greater diameter than the insertion hole of the valve housing can be ensured by the annular seal, the sleeve, and a wall surface of the valve housing. This space increases a circulation space for fluid, and as a result, prevents the penetration of contaminants into the solenoid valve unit.

The solenoid valve device is further characterized in that the annular seal has a circular ring shape continuously extending in a circumferential direction, the breathing hole communicates with a space B, which is surrounded by an upper wall of the molded solenoid component, a side wall of the first opening of the solenoid case, an outer periphery of the sleeve, an upper wall of the solenoid case, an outer wall of the valve housing, and an inner peripheral wall of the annular member, the space B includes a space B1, which is surrounded by the outer periphery of the sleeve, the upper wall of the solenoid case, the outer wall of the valve housing, and the inner peripheral wall of the annular member.

According to such a feature, the force caused due to, for example, vibrations of the solenoid valve unit can be equally dispersed in the circumferential direction and received, and favorable restoring properties can be exhibited.

The solenoid valve device may be characterized in that the annular seal is an elastic sealing member.

According to such a feature, reliable sealing by the seal can be realized by the elastic force of the elastic sealing member, and elastic restoring force reduces, for example, the influence of vibrations.

The solenoid valve device may be characterized in that the annular seal is a raised portion protruding from an end wall of the solenoid case on the side of the valve portion, and brought into contact with an outer surface of the valve housing.

According to such a feature, the annular seal is the raised portion provided on the end wall of the solenoid case, said end wall being on the side of the valve portion. A simple structure can be realized, and a sealing structure can be formed by simply attaching the solenoid valve unit to the valve housing. Favorable assemblability can be realized with less work such as positioning.

The solenoid valve device may be characterized in that the breathing hole is provided at a position where at least a part of the breathing hole overlaps with the annular seal in the axial direction.

According to such a feature, at least a part of the breathing hole faces the annular seal. A buffer function provided by the closed space upon breathing can be effectively exhibited.

### {BRIEF DESCRIPTION OF DRAWINGS}

FIG. 1 is a perspective view of a solenoid valve unit in a first embodiment;
FIG. 2 is a cross-sectional view of a solenoid valve device of the first embodiment along line A-A;
FIG. 3 is a perspective view of a sleeve and a solenoid case forming the solenoid valve unit in the first embodiment;
FIGS. 4(a) to 4(c) are views illustrating breathing channels in the solenoid valve device of the first embodiment, in which FIG. 4(a) is a partially-cutaway front view of the solenoid case and a valve housing, FIG. 4(b) is a partially-cutaway plan view of the solenoid case and the valve housing, FIG. 4(c) is a cross-sectional view along line B-B, and FIG. 4(d) is a cross-sectional view along line C-C; and
FIG. 5 is a partially-cutaway front view of a solenoid case and a valve housing, and illustrates breathing channels in a solenoid valve device of a second embodiment.

### {DESCRIPTION OF EMBODIMENTS}

Embodiments of the solenoid valve device according to the present invention will hereinafter be described on the basis of examples.

### First Embodiment

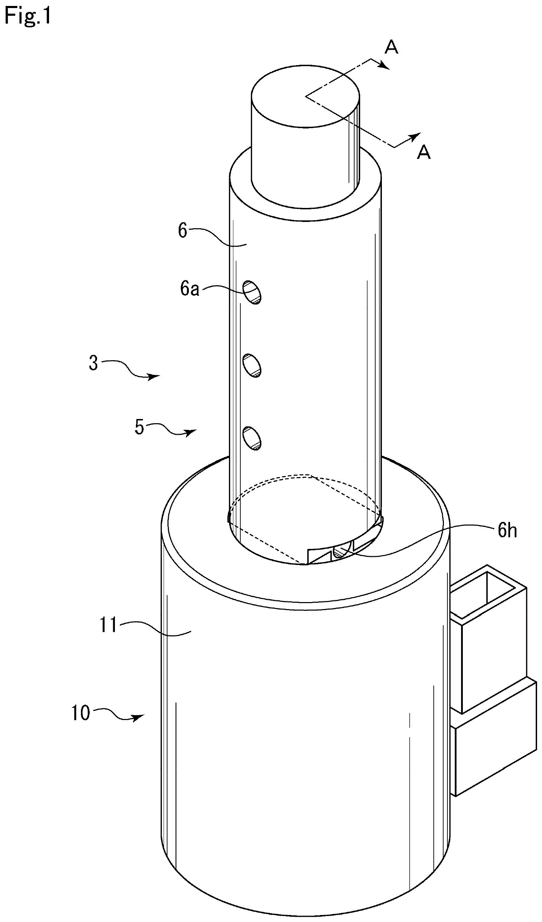

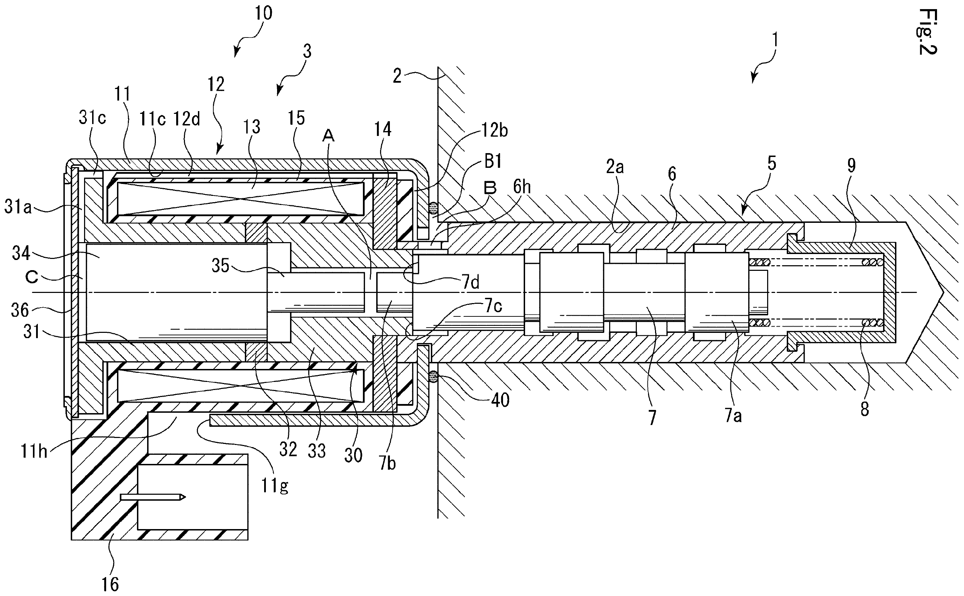

A solenoid valve device of a first embodiment will be described with reference to FIGS. 1 to 4. Hereinafter, the left side as viewed in the plane of paper of FIG. 2 will be described as a bottom (a lower side) of a solenoid valve unit, and the right side as viewed in the plane of paper of FIG. 2 will be described as a top (an upper side) of the solenoid valve unit.

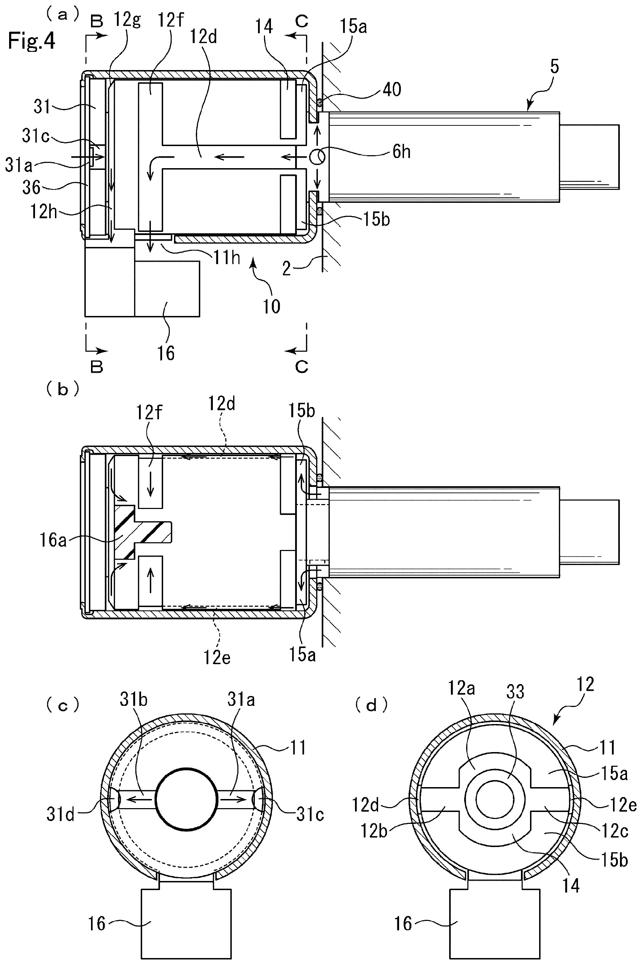

A solenoid valve unit 3 is a spool-typed solenoid valve, and is used for an apparatus controlled by oil pressure such as, for example, an automatic transmission of a vehicle. A device with the solenoid valve unit 3 assembled in a valve housing 2 as illustrated in FIGS. 2 and 4 is called as a "solenoid valve device 1".

The solenoid valve unit 3 includes a solenoid portion (a linear solenoid) 10 as an electromagnetic driver and a valve portion 5 configured as a valve to regulate the flow rate of fluid and integrally attached to the solenoid portion 10. Attachment of the valve portion 5 will be described in detail later.

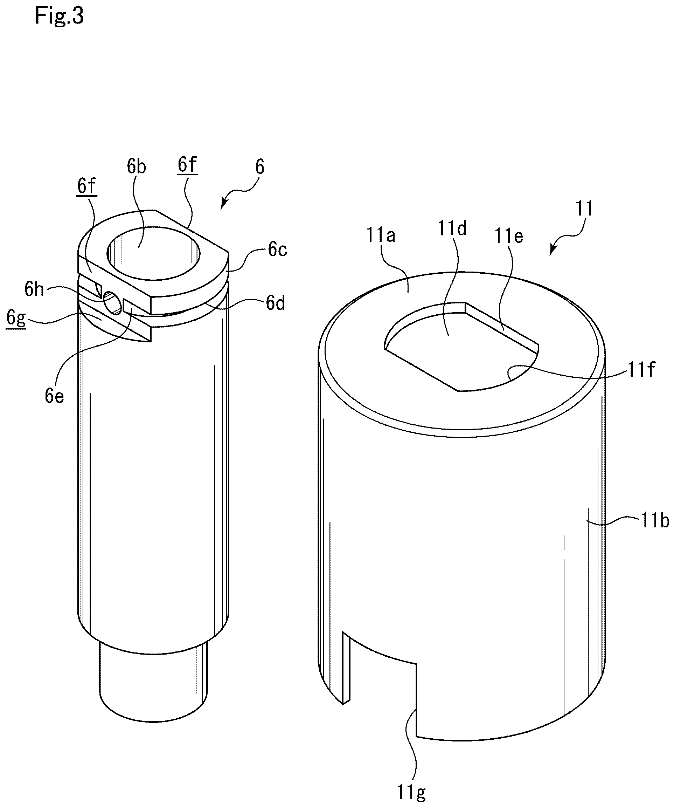

The valve portion 5 includes a sleeve 6 provided, at an outer periphery thereof, with input ports 6a (FIG. 1) connected to a flow path (not shown) provided in the valve housing 2 and unillustrated openings such as output ports, a spool 7 housed in a through-hole 6b (FIG. 3) of the sleeve 6 in a liquid-tight state and provided with a plurality of lands 7a, a coil-shaped spring 8 biasing the spool 7 downward in an axial direction, and a retainer 9 holding the spring 8. Since such configurations are well-known for spool valves, detailed description thereof will not be made. Note that the sleeve 6, the spool 7, and the retainer 9 are made of a material such as aluminum, iron, stainless steel, or resin.

As illustrated in FIG. 3, an end portion of the sleeve 6 is formed in a stadium shape having a pair of straight lines and a pair of arcs as viewed in the axial direction. The end portion is provided with axially-cut faces 6f formed respectively on opposite sides of a cylinder along the axial direction, radially-cut faces 6g formed respectively on opposite sides of the cylinder along radial directions, and slits 6d formed in a circumferential direction at positions apart from end faces of the end portion, where the axially-cut faces 6f are formed. As described above, flanges 6c are formed at an end of the sleeve 6, arc-shaped engagement faces 6e are formed on inner diameter sides of the slits 6d, and each axially-cut face 6f is formed in a substantially H-shape. Moreover, one of the axially-cut faces 6f is provided with a breathing hole 6h extending through the axially-cut face 6f in a radial direction, and the breathing hole 6h communicates with the through-hole 6b.

As illustrated in FIG. 2, the spool 7 in provided at a lower end portion thereof with a small-diameter protrusion 7b protruding into a through-hole of a center post 33, and also with a shoulder portion 7c formed on a side closer to the spring 8 than the protrusion 7b and maintained in contact with an upper end wall of the center post 33. A cutout 7d is formed extending in radial directions in an outer periphery of the shoulder portion 7c. In the state illustrated in FIG. 2 that the solenoid valve unit 3 is OFF, the breathing hole 6h communicates through the cutout 7d with a space A in which an armature 34 is housed.

The solenoid portion 10 mainly includes a solenoid case 11, a molded solenoid component 12 housed in the solenoid case 11, a movable portion 30 housed in the molded solenoid component 12, and an end plate 36 swaged to the solenoid case 11.

As illustrated in FIG. 3, the solenoid case 11 is in such a cap shape that a pipe-shaped cylindrical portion 11b is connected to a discoid plate portion 11a. The discoid plate portion 11a is provided, at a center thereof, with a stadium-shaped opening 11d (a first opening, an engagement hole) including linear portions 11e and arc portions 11f and having an outer shape slightly larger than the end portion of the sleeve 6. A cutout 11g into which a connector portion 16 is to be inserted is formed in an end portion of the cylindrical portion 11b.

As illustrated in FIG. 2, the molded solenoid component 12 is formed such that a coil 13 and a lower plate 14 are integrally molded in resin 15, and a control voltage is supplied from a connector of the connector portion 16 protruding out of the solenoid case 11. The coil 13 is configured to generate a magnetic field corresponding to the control voltage, thereby generating axial drive force (magnetic attractive force) on the armature 34. Such drive force moves the spool 7 in the axial direction against the biasing force of the spring 8 through the armature 34 and a rod 35.

The movable portion 30 is provided on an inner peripheral side of the molded solenoid component 12, and an annular side ring 31 provided on a bottom side thereof with a radially-extending flange, a ring-shaped spacer 32, and the center post 33 are arranged in description order from a bottom side of the movable portion 30. The armature 34 is disposed movably in the axial direction on an inner periphery of the side ring 31, and the rod 35 is disposed movably in the axial direction on an inner periphery of the center post 33. The armature 34 and the rod 35 are integrally movable. Note that the armature 34 may be in such a form that the armature 34 directly contacts the spool 7 (in this case, the rod 35 is not required).

Next, an example of an assembly process of the solenoid valve unit 3 will be described. First, the retainer 9 is swaged to the sleeve 6, and then, the spring 8 and the spool 7 are inserted into the sleeve 6. In this manner, the valve portion 5 is assembled. Next, the flanges 6c of the sleeve 6 are inserted into the opening 11d of the solenoid case 11, and the sleeve 6 is rotated 90 degrees about an axis with the slit 6d being positioned corresponding to the opening 11d. As a result, the sleeve 6 is prevented from being pulled out of the solenoid case 11 with the linear portions 11e of the opening 11d being held in the slits 6d (the state illustrated in FIG. 1). The outer diameter defined by the engagement faces 6e formed by an inner peripheral walls of the slits 6d is substantially equal to the distance between the respective linear portions 11e of the opening 11d. In the state illustrated in FIG. 1, inner walls of both linear portions 11e and the engagement faces 6e partially contact each other.

The molded solenoid component 12 is inserted into the solenoid case 11. The flanges 6c of the sleeve 6, which define a stadium-shaped cross section, is fitted into a recessed portion 12a (FIG. 4(d)) having substantially the same stadium shape as the flanges 6c, and an upper wall of the lower plate 14 is brought into contact with lower walls of the flanges 6c. Then, when the movable portion 30 is inserted into the molded solenoid component 12, a shoulder portion of the center post 33 comes into contact with an inner-periphery-side lower wall of the lower plate 14, and an upper end wall of the lower plate 14 comes into contact with a lower end wall of the shoulder portion 7c of the spool 7. As a consequence, the spool 7 is slightly moved in the axial direction against the biasing force of the spring 8. Eventually, the end plate 36 is swaged to a bottom portion of the solenoid case 11 to assemble the solenoid valve unit 3. In this state (FIG. 2), the spool 7 is in a state that it is biased downward by the spring 8.

The solenoid valve device 1 is assembled by fitting the valve portion 5 of the solenoid valve unit 3 in an attachment hole 2a provided in the valve housing 2. An O-ring 40 (an annular seal, an elastic sealing member) having a greater inner diameter than the outer diameter of the sleeve 6 is provided around the outer periphery of the valve portion 5. The O-ring 40 is held between the valve housing 2 and the solenoid case 11, and therefore, an annular space B1 (a part of a space B to be described later) formed around the sleeve 6 is sealed airtight. Note that a well-known method may be employed as a method for fixing the solenoid valve unit 3 to the valve housing 2. Examples include a method that fixes the solenoid case 11 and the valve housing 2 together with screws, a method that press-fits the solenoid valve unit 3 into the attachment hole 2a of the valve housing 2 via an O-ring (not shown) attached to the outer periphery of the sleeve 6, and a method that swages a part of the valve housing 2 to the sleeve 6.

Next, operation of the solenoid valve unit 3 will be described. In the OFF state illustrated in FIG. 2, when control power is supplied, the armature 34 and the rod 35 move toward the valve portion 5 under magnetic attractive force of the coil 13, and an upper end (an end wall on the side of the valve portion 5) of the rod 35 comes into contact with a lower end of the protrusion 7b of the spool 7, whereby the spool 7 is moved toward the retainer 9. The amount of control fluid that flows from the input ports 6a of the valve portion 5 to the unillustrated output ports is determined by the position of the spool 7 (the position of each land 7a of the spool 7) in the sleeve 6. That is, the higher a current to be supplied to the coil 13, the greater the amount of control fluid.

When the magnetic attractive force of the coil 13 becomes relatively weaker, the spool 7 is moved toward the solenoid portion 10 under the biasing force of the spring 8. The shoulder portion 7c of the spool 7 then comes into contact with the upper end wall of the center post 33 to restrict the movement of the spool 7, while the armature 34 and the rod 35 further move toward the end plate 36. Thus, a clearance is formed between the upper end of the rod 35 and the lower end of the protrusion 7b of the spool 7 (i.e., the state illustrated in FIG. 2).

The breathing hole 6h is in communication, through the cutout 7d formed at the spool 7, with the space A in which the armature 34 and the rod 35 are housed. Even when the spool 7 has been moved toward the solenoid portion 10 (in a non-energized state), the space A and the breathing hole 6h are connected each other for communication. The breathing hole 6h formed in the sleeve 6 communicates with the space B, which is surrounded by an upper wall of the molded solenoid component 12, a side wall of the opening 11d of the solenoid case 11, the outer periphery of the sleeve 6, an upper wall of the solenoid case 11, an outer wall of the valve housing 2, and an inner peripheral wall of the O-ring 40. That is, the space A and the space B communicate with each other through the breathing hole 6h. Note that the space B1 is a part of the space B, and is a space surrounded by the outer periphery of the sleeve 6, the upper wall of the solenoid case 11, the outer wall of the valve housing 2, and the inner peripheral wall of the O-ring 40.

Referring to FIG. 4, the molded solenoid component 12 is provided on an upper end side thereof with raised portions 15a, 15b of the resin 15, each of which protrudes in a substantially C-shape, with a recessed portion 12a of a substantially stadium shaped formed on an inner side of the raised portions 15a, 15b, and also with radial grooves 12b, 12c formed in radial directions (the right-to-left direction as viewed in FIG. 4(d)) (the lower plate 14 is exposed to the outside at positions where the recessed portion 12a and the radial grooves 12b, 12c are formed). Moreover, axial grooves 12d, 12e are formed in a side wall of the molded solenoid component 12 and a side wall of the lower plate 14 so that they communicate with the radial grooves 12b, 12c, respectively, and extend backward in the axial direction. A circumferential groove 12f is formed in the end wall of the molded solenoid component 12 so that it extends circumferentially along the outer periphery of the molded solenoid component 12 and communicates with an opening 11h (a second opening). The opening 11h is a clearance formed between the molded solenoid component 12 and the cutout 11g of the solenoid case 11, into which the connector portion 16 is fitted, and this clearance communicates to the outside.

The end wall of the side ring 31 on the side of the end plate 36 is provided with radial grooves 31a, 31b for communication between the center opening and the outer periphery of the side ring 31, and the outer periphery of the side ring 31 is provided with axial grooves 31c, 31d communicating, with the radial grooves 31a, 31b, respectively, and extending in the axial direction. Moreover, a chamfered portion 12g is formed in an outer peripheral corner portion of the end wall of the molded solenoid component 12, said end wall being on the side of the end plate 36, and therefore, a circumferential groove 12h is formed to extend around the outer periphery of the molded solenoid component 12 between the molded solenoid component 12 and the side ring 31. The axial grooves 31c, 31d communicate with the circumferential groove 12h, and communicate with the opening 11h of the solenoid case 11 at the positions shifted about 90 degrees. That is, a space C (a center opening space of the side ring 31) of the armature 34 on the side of the end plate 36 communicates to the outside of the solenoid valve unit 3 through the radial grooves 31a, 31b and the axial grooves 31c, 31d of the side ring 31, the circumferential groove 12h, and the opening 11h of the solenoid case 11.

The cutout 7d, the breathing hole 6h, the radial grooves 12b, 12c, the axial grooves 12d, 12e, and the circumferential groove 12f form a main path for passage of a majority of fluid as a breathing path that communicates the space A, in which the armature 34 and the rod 35 are housed, to the opening 11h. The breathing path is a path extending from the space A to the opening 11h, and a breathing channel is part (a groove) of the breathing path, said part being located in the solenoid case 11. In addition to the main path, the space B1 (the part of the space B), which is formed between the inner periphery of the O-ring 40 and the outer periphery of the sleeve 6 and is branched from the main path in the radial direction, and the like are formed. When the armature 34 is in a predetermined region, the cutout 7d formed in the spool 7 communicates with the breathing hole 6h, and the space A communicates with the opening 11h through the breathing path. Here, the expression "when the armature 34 is in a predetermined region" means, in the first embodiment, a region from the lowermost position of the spool 7 (the non-energized state) to a small-inner-diameter position at which the cutout 7d is positioned slightly above the breathing hole 6h of the sleeve 6. Note that the spool 7 is in this region under normal use conditions of the solenoid valve unit 3.

When the control power is supplied under the non-energized state, the armature 34 is attracted by the center post 33 to move toward the valve portion 5. Then, the armature 34 moves the spool 7 toward the retainer 9, and the fluid in the space A is quickly discharged to the outside through the breathing path. Thus, the solenoid valve unit 3 is provided with improved responsiveness. When the power supplied to the coil 13 is stopped or decreased and the armature 34 moves apart from the valve portion 5, the fluid can quickly flow into the space A from the outside through the breathing path. In this case, the solenoid valve unit 3 is also provided with improved responsiveness.

The two axial grooves 12d, 12e formed in the outer periphery of the molded solenoid component 12 are formed and placed such that the center angles of the axial grooves 12d, 12e are each shifted 90 degrees from the opening 11h of the solenoid case 11, and are in communication with the opening 11h through the circumferential groove 12f. Thus, the breathing channel from the space A to the opening 11h is ensured to be as long and complex as possible. Moreover, the radial grooves 31a, 31b and the axial grooves 31c, 31d formed in the side ring 31 are also formed and placed such that their center angles are shifted 90 degrees from the opening 11h, and are in communication with the opening 11h through the circumferential groove 12f between the side ring 31 and the molded solenoid component 12. Thus, the breathing channel from the space C on the side of the end plate 36 of the armature 34 to the opening 11h is also ensured to be as long and complex as possible. As a result, it is possible to reduce the probability that contaminants around the solenoid valve unit 3 enter the space A between the armature 34 and the spool 7 and the space C between the armature 34 and the end plate 36. Thus, improved contamination resistance can be provided.

With a proper cross-sectional area of each breathing channel, the solenoid valve unit 3 can be obtained with proper quickness, adequate damping performance, and stable response performance. The cutout 7d and the breathing hole 6h preferably have a flow path cross-sectional area of about 0.2 to 2.1 mm², for example. Such a flow path cross-sectional area is preferred because it can bring about an effect of enhancing the responsiveness of the solenoid valve unit 3 as described above and an effect of producing a damping effect on a movement of the armature 34 by fluid resistance upon inflow/outflow of fluid due to such a small flow path cross-sectional area.

The space B1 having a greater diameter than the attachment hole 2a of the valve housing 2 can be ensured at the position surrounded by the O-ring 40, the spool 7, and the valve housing 2. This space B1 provides an increased circulation space for fluid, and as a result, prevents contaminants from penetrating into the solenoid valve unit. Further, the breathing hole 6h faces the space B1 formed in an annular shape in a direction that intersects the direction of a flow of fluid from the breathing hole 6h to the radial groove 12b in the main path. Thus, the flow direction of fluid flowing into the breathing hole 6h or flowing out from the breathing hole 6h changes in the vicinity of the breathing hole 6h. However, the space B1 formed in the annular shape is located at the point of such a change, and therefore, contaminants tend to be caught by the annular space. Moreover, the caught contaminants tend to be held in the space B1 by the force of gravity and static electricity.

In addition, the space B1 formed in the annular shape is provided in the vicinity of the breathing hole 6h, and therefore, functions as a buffer that transitionally (at the initial state of a movement of the armature 34) supplies fluid to the space A upon movement of the armature 34. Thus, the armature 34 can be quickly operated, and fluid vibration can be reduced. Such effects are more noticeable when the fluid is compressible gas.

The end portion of the sleeve 6 and the opening 11d of the solenoid case 11 are formed in the stadium shape. Moreover, the end portion of the sleeve 6 is inserted into the opening 11d, and the sleeve 6 is rotated 90 degrees about the axis with the slit 6d being positioned corresponding to the opening 11d. This prevents the sleeve 6 from being pulled out of the solenoid case 11 with the linear portions 11e of the opening 11d being held in the slits 6d. Thus, the sleeve 6 can be, with the simple configuration, attached to the solenoid case 11.

The axially-cut face 6f, i.e., the smaller-diameter end portion of the sleeve 6, is provided with the breathing hole 6h. Thus, the engagement face 6e can be ensured to have a sufficient engagement margin without an interference of the engagement face 6e with the breathing hole 6h. Moreover, since the axially-cut face 6f is a linear portion, the breathing hole 6h can be easily machined with a high accuracy, and a long distance, i.e., a large space (B1), can be ensured from the breathing hole 6h to the outer side in the radial direction.

Since the connector portion 16 and the cutout 11g form the opening 11h that communicates with the outside, it is not necessary to provide the solenoid portion 10 with any other opening for breathing.

Moreover, since the opening 11d and the breathing hole 6h are, by the O-ring 40, sealed from the outside through the clearance between the outer wall of the valve housing 2 and the upper wall of the solenoid case 11, the space A formed between the armature 34 and the sleeve 6 communicates with the breathing channels 12b, 12c, 12d, 12e, 12f through the breathing hole 6h. When the armature 34 moves, fluid in the space A is ensured to move to the outside through the breathing path and the opening 11h. Thus, fluid resistance is small, and the armature 34 can quickly move.

Further, since the O-ring 40 is disposed surrounding the sleeve 6, a line contact is established to provide an increased contact pressure per unit area as compared with the case of a surface contact. Even if vibrations occur by, for example, movements of the armature 34, there is almost no probability of forming a clearance between the solenoid case 11 and the valve housing 2. This can suppress contaminants-containing fluid from penetrating into the space A formed between the armature 34 and the spool 7.

In addition, since the O-ring 40 is in the shape having the greater inner diameter than the outer diameter of the spool 7, the O-ring 40 seals between the solenoid case 11 and the valve housing 2 at positions radially apart from the spool 7 as a center. Thus, force caused by vibrations of the solenoid valve unit 3 is received at the positions radially apart from the sleeve 6 as the center, and therefore, a clearance is hardly formed between the solenoid case 11 and the valve housing 2.

Moreover, since the O-ring 40 is in the annular shape that continuously extends in the circumferential direction, the force caused by vibrations of the solenoid valve unit 3 can be equally distributed and received. In addition, the use of the O-ring 40 ensures sealing.

Further, the breathing hole 6h is provided at the small-diameter portion of the end portion of the sleeve 6 such that at least a part of the breathing hole 6h overlaps with the opening 11d in the axial direction. Thus, the solenoid valve unit 3 can be configured without increasing its length in the axial direction.

### Second Embodiment

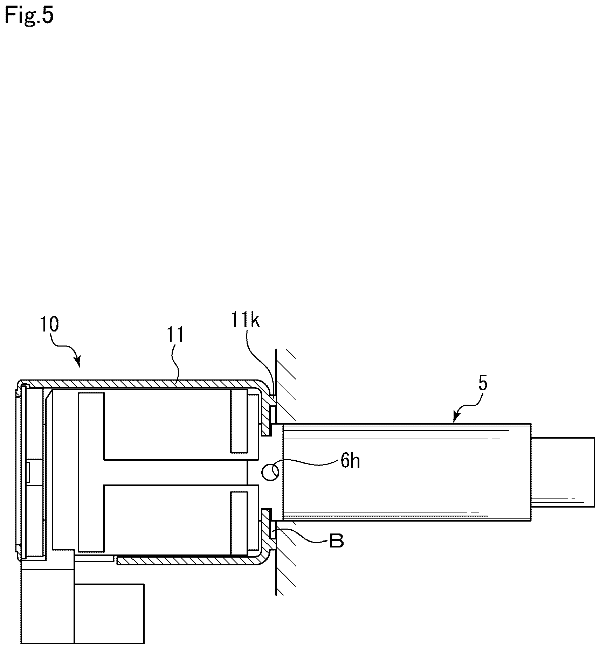

Next, a solenoid valve device of a second embodiment will be described with reference to FIG. 5. The second embodiment is different from the first embodiment in that the O-ring 40 of the first embodiment has been replaced by raised annular portion 11k (an annular seal), which protrudes from an end wall of the solenoid case 11, said end wall being on the side of the valve portion, and continuously extends in a circumferential direction in contact with the outer wall of the valve housing 2. Note that the description of the same overlapping configurations as those of the first embodiment will not be repeated.

As described above, since the raised portion 11k is provided, as the seal, on the end wall of the solenoid case 11 said end wall being on the side of the valve portion, the structure is simpler. Moreover, a sealing structure can be realized by simple attachment of the solenoid valve unit 3 to the valve housing 2. Thus, compared with the case of using other member such as the O-ring 40, favorable assemblability can be realized with less work such as positioning.

The embodiments of the present invention have been described above with reference to the drawings, but the specific configurations of the present invention are not limited to these embodiments. Even if changes and/or additions are made to the solenoid valve device according to the present invention without departing from the gist of the present invention, such solenoid valve devices should still be included in the present invention.

For example, in the first and second embodiments, of the description is made about the O-ring 40 and the raised portion 11k the inner diameters of which are greater than the outer diameter of the sleeve 6. However, their diameters may be equal to the outer diameter of the sleeve 6. Such cases no longer include the space B1 that radially branches and extends out from the main path toward the outside of the sleeve 6. If the O-ring 40 is adopted, however, it is only necessary to assemble the solenoid valve unit 3 to the valve housing 2 with the O-ring 40 being fixed on the outer periphery of the sleeve 6. Thus, favorable assemblability is realized.

The shape of each breathing channel as a passage provided in the solenoid case is not limited to the form of a groove, but may be in the form of a pipe, for example. Moreover, as the direction of extension of the passage provided in the solenoid case, the description is made about a combination of radial directions, an axial direction, and a circumferential direction. However, as long as such a passage is long and complex, any passage can be used including, for example, a combination of channels extending in helical directions.

Further, the description is made about the case that the breathing hole 6h and the radial groove 12b are arranged at the same angle as viewed in the circumferential direction in the state in which the solenoid valve unit 3 has been assembled. However, the breathing hole 6h and the radial groove 12b may be arranged at different angles. For example, in FIG. 4(a), the breathing hole 6h may be shifted 90° in the circumferential direction, and may be disposed on the upper or lower side as viewed in FIG. 4(a). In this case, fluid needs to pass through about 1/4 of the circumference of the annular space B1 between the breathing hole 6h and each groove 12b, 12c, and therefore, the breathing path can be further extended. Moreover, the grooves 12b, 12c are arranged at equal angles with respect to the breathing hole 6h, and therefore, fluid is allowed to flow at a substantially equal flow rate into both grooves 12b, 12c.

In addition, the member that realizes the sealing structure is described using the O-ring. However, not only the O-ring but also an elastic sealing member, such as a square ring, and other sealing members may be used.

### {REFERENCE SIGNS LIST}

- 1: Solenoid valve device
- 2: Valve housing
- 2a: Attachment hole
- 3: Solenoid valve unit
- 5: Valve portion
- 6: Sleeve
- 6d: Slit
- 6h: Breathing hole
- 7: Spool
- 7d: Cutout
- 10: Solenoid portion
- 11: Solenoid case
- 11d: Opening (First opening)
- 11h: Opening (Second opening)
- 11k: Raised portion (Annular seal)
- 12: Molded solenoid component
- 12b, 12c: Radial groove (Breathing channel)
- 12d, 12e: Axial groove (Breathing channel)
- 12f: Circumferential groove (Breathing channel)
- 34: Armature
- 40: O-ring (Annular seal, Elastic sealing member)
- A: Space

## Claims

1. A solenoid valve device (1) comprising:
a solenoid valve unit (3) including
a spool (7),
a sleeve (6) configured such that the spool (7) is internally disposed movably in an axial direction,
a valve portion (5) movable by the spool (7),
an armature (34) configured to move the spool (7),
a molded solenoid component (12) disposed around an outer periphery of the armature (34) and having a solenoid portion (10) disposed therein, and
a solenoid case (11) with the armature (34) and the molded solenoid component (12) housed therein; and
a valve housing (2) provided with an attachment hole (2a) into which the sleeve (6) of the solenoid valve unit (3) is inserted;
wherein the solenoid valve unit (3) further comprises:
a breathing hole (6h) extending in a radial direction through the sleeve (6) on a side of the solenoid portion (10) and bringing a first space (A), which is formed between the armature (34) and the spool (7) when the armature (34) is at least in a predetermined region, into communication with an outside;
a first opening (11d) facing a side of the valve portion (5) and opening to the outside;
a second opening (11h) opening to the outside; and
a breathing channel in the solenoid case (11), said breathing channel communicating at an end thereof with the first opening (11d) and communicating at an opposite end thereof with the second opening (11h),
the solenoid valve device (1) being **characterized by**
the solenoid valve unit (3) and the valve housing (2) being fixed together with an annular seal (40, 11k) interposed around the sleeve (6) so that a passage between the breathing hole (6h) and the first opening (11d) of the solenoid valve unit (3) is ensured and a passage between the breathing hole (6h) and the outside is cut off, wherein
the annular seal (40, 11k) is an annular member having an inner diameter greater than an outer diameter of the sleeve (6) and having an inner diameter greater than that of the attachment hole (2a) of the valve housing (2), and wherein
the annular seal (40, 11k) has a circular ring shape continuously extending in a circumferential direction, and by
the breathing hole (6h) communicating with a second space (B) which is surrounded by an upper wall of the molded solenoid component (12), a side wall of the first opening (11d) of the solenoid case (11), an outer periphery of the sleeve (6), an upper wall of the solenoid case (11), an outer wall of the valve housing (2), and an inner peripheral wall of the annular seal (40, 11k), wherein
the second space (B) includes a third space (B1) which is surrounded by the outer periphery of the sleeve (6), the upper wall of the solenoid case (11), the outer wall of the valve housing (2), and the inner peripheral wall of the annular seal (40, 11k).

2. The solenoid valve device (1) as set forth in claim 1, **characterized in that**:
the annular seal (40, 11k) is an elastic sealing member.

3. The solenoid valve device (1) as set forth in claim 1, **characterized in that**:
the annular seal (40, 11k) is a raised portion protruding from an end wall of the solenoid case (11) on the side of the valve portion (5), and brought into contact with an outer surface of the valve housing (2).

4. The solenoid valve device (1) as set forth in any one of claims 1 to 3, **characterized in that**:
the breathing hole (6h) is provided at a position where at least a part of the breathing hole (6h) overlaps with the annular seal (40, 11k) in the axial direction.

## Patentansprüche

1. Magnetventilvorrichtung (1) mit:
einer Magnetventileinheit (3) einschließlich
einer Spule (7),
einer Hülse (6), welche so ausgebildet ist, dass die Spule (7) im Inneren beweglich in einer axialen Richtung angeordnet ist,
einem Ventilabschnitt (5), welcher durch die Spule (7) bewegt werden kann,
einer Armatur (34), welche die Spule (7) bewegen kann,
einem geformten Magnetteil (12), welches um einen äußeren Umfang der Armatur (34) angeordnet ist und einen darin angeordneten Magnetabschnitt (10) aufweist, und
einem Magnetgehäuse (11) mit der Armatur (34) und dem darin aufgenommenen geformten Magnetteil (12), und
einem Ventilgehäuse (2), welches ein Befestigungsloch (2a) aufweist, in welches die Hülse (6) der Magnetventileinheit (3) eingeführt ist,
wobei die Magnetventileinheit (3) weiterhin aufweist:
eine Ausgleichsbohrung (6h), welche sich in einer radialen Richtung durch die Hülse (6) auf einer Seite des Magnetabschnitts (10) erstreckt und eine erste Lücke (A), welche zwischen der Armatur (34) und der Spule (7) gebildet wird, wenn die Armatur (34) in zumindest einem vorbestimmten Bereich ist, mit einer Außenseite verbindet,
einer ersten Öffnung (11d), welche einer Seite des Ventilabschnitts (5) zugewandt ist und sich zu der Außenseite hin öffnet,
einer zweiten Öffnung (11h), welche sich zu der Außenseite hin öffnet, und
einem Ausgleichstunnel in dem Magnetgehäuse (11), wobei der Ausgleichstunnel an einem Ende davon mit der ersten Öffnung (11d) verbunden ist und an einem gegenüberliegenden Ende davon mit der zweiten Öffnung (11h) verbunden ist,
wobei die Magnetventilvorrichtung (1) **dadurch gekennzeichnet ist, dass**
die Magnetventileinheit (3) und das Ventilgehäuse (2) durch eine ringförmige Dichtung (40, 11k), welche um die Hülse (6) angeordnet ist, miteinander verbunden sind, sodass ein Kanal zwischen der Ausgleichsbohrung (6h) und der ersten Öffnung (11d) der Magnetventileinheit (3) gewährleistet ist, und ein Kanal zwischen der Ausgleichsbohrung (6h) und der Außenseite abgeschnitten ist, wobei
die ringförmige Dichtung (40, 11k) ein ringförmiges Element ist, welches einen inneren Durchmesser hat, welcher größer als ein äußerer Durchmesser der Hülse (6) ist, und einen inneren Durchmesser hat, welcher größer als derjenige des Befestigungslochs (2a) des Ventilgehäuses (2) ist, und wobei
die ringförmige Dichtung (40, 11k) eine kreisförmige Ringform hat, welche sich kontinuierlich in einer Umfangsrichtung erstreckt, und dadurch dass
die Ausgleichsbohrung (6h) mit einer zweiten Lücke (B) verbunden ist, welche von einer oberen Wand des geformten Magnetteils (12), einer Seitenwand der ersten Öffnung (11d) des Magnetgehäuses (11), einer äußeren Begrenzungsfläche der Hülse (6), einer oberen Wand des Magnetgehäuses (11), einer äußeren Wand des Ventilgehäuses (2) und einer inneren Begrenzungswand der ringförmigen Dichtung (40, 11k) umgeben ist, wobei
die zweite Lücke (B) eine dritte Lücke (B1) aufweist, welche von dem äußeren Umfang der Hülse (6), der oberen Wand des Magnetgehäuses (11), der äußeren Wand des Ventilgehäuses (2) und der inneren Umfangswand der ringförmigen Dichtung (40, 11k) umgeben ist.

2. Magnetventilvorrichtung (1) nach Anspruch 1, **dadurch gekennzeichnet, dass**:
die ringförmige Dichtung (40, 11k) ein elastisches Dichtungselement ist.

3. Magnetventilvorrichtung (1) nach Anspruch 1, **dadurch gekennzeichnet, dass**:
die ringförmige Dichtung (40, 11k) ein erhöhter Abschnitt ist, welcher von einer Stirnwand des Magnetgehäuses (11) auf der Seite des Ventilabschnitts (5) hervorsteht, und mit einer äußeren Oberfläche des Ventilgehäuses (2) in Kontakt steht.

4. Magnetventilvorrichtung (1) nach einem der Ansprüche 1 bis 3, **dadurch gekennzeichnet, dass**:
die Ausgleichsbohrung (6h) an einer Position angeordnet ist, an welcher zumindest ein Teil der Ausgleichsbohrung (6h) sich mit der ringförmigen Dichtung (40, 11k) in axialer Richtung überschneidet.

## Revendications

1. Dispositif à électrovanne (1) comprenant :
une unité d'électrovanne (3) comprenant
un tiroir (7),
un manchon (6) configuré de telle sorte que le tiroir (7) est disposé intérieurement de manière mobile dans une direction axiale,
une partie de vanne (5) pouvant être déplacée par le tiroir (7),
un armature (34) configurée pour déplacer le tiroir (7),
un composant à solénoïde moulé (12) disposé autour d'une périphérie extérieure de l'armature (34) et ayant une partie de solénoïde (10) disposé dans celle-ci, et
un boîtier de solénoïde (11) dans lequel l'armature (34) et le composant à solénoïde moulé (12) sont logés ; et
un boîtier de vanne (2) muni d'un trou de fixation (2a) dans lequel est inséré le manchon (6) de l'unité d'électrovanne (3) ;
dans lequel l'unité d'électrovanne (3) comprend en outre :
un trou de respiration (6h) s'étendant dans une direction radiale à travers le manchon (6) sur un côté de la partie de solénoïde (10) et amenant un premier espace (A), qui est formé entre l'armature (34) et le tiroir (7) lorsque l'armature (34) est au moins dans une région prédéterminée, en communication avec un extérieur ;
une première ouverture (11d) faisant face à un côté de la partie de vanne (5) et s'ouvrant vers l'extérieur ;
une seconde ouverture (11h) s'ouvrant vers l'extérieur ; et
un canal de respiration dans le boîtier de solénoïde (11), ledit canal de respiration communiquant à une extrémité de celui-ci avec la première ouverture (11d) et communiquant à une extrémité opposée de celui-ci avec la seconde ouverture (11h),
le dispositif à électrovanne (1) étant **caractérisé en ce que**
l'unité d'électrovanne (3) et le boîtier de vanne (2) sont fixés ensemble avec un joint d'étanchéité annulaire (40, 11k) interposé autour du manchon (6) de sorte qu'un passage entre l'orifice de respiration (6h) et la première ouverture (11d) de l'unité d'électrovanne (3) est assuré et qu'un passage entre le trou de respiration (6h) et l'extérieur est coupé,
le joint d'étanchéité annulaire (40, 11k) est un élément annulaire ayant un diamètre interne supérieur à un diamètre externe du manchon (6) et ayant un diamètre interne supérieur à celui du trou de fixation (2a) du boîtier de vanne (2), et
le joint d'étanchéité annulaire (40, 11k) a une forme d'anneau circulaire s'étendant de manière continue dans une direction circonférentielle, et par le trou de respiration (6h) communiquant avec un deuxième espace (B) qui est entouré par une paroi supérieure du composant à solénoïde moulé (12), une paroi latérale de la première ouverture (11d) du boîtier de solénoïde (11), une périphérie extérieure du manchon (6), une paroi supérieure du boîtier de solénoïde (11), une paroi extérieure du boîtier de vanne (2) et une paroi périphérique intérieure du joint d'étanchéité annulaire (40, 11k),
le deuxième espace (B) comprend un troisième espace (B1) qui est entouré par la périphérie externe du manchon (6), la paroi supérieure du boîtier de solénoïde (11), la paroi externe du boîtier de vanne (2), et la paroi périphérique intérieure du joint d'étanchéité annulaire (40, 11k).

2. Dispositif à électrovanne (1) selon la revendication 1, **caractérisé en ce que** :
le joint d'étanchéité annulaire (40, 11k) est un élément d'étanchéité élastique.

3. Dispositif à électrovanne (1) selon la revendication 1, **caractérisé en ce que** :
le joint d'étanchéité annulaire (40, 11k) est une partie surélevée dépassant d'une paroi d'extrémité du boîtier de solénoïde (11) sur le côté de la partie de vanne (5), et amenée en contact avec une surface extérieure du boîtier de vanne (2).

4. Dispositif à électrovanne (1) selon l'une quelconque des revendications 1 à 3, **caractérisé en ce que** :
le trou de respiration (6h) est prévu dans une position où au moins une partie du trou de respiration (6h) chevauche le joint d'étanchéité annulaire (40, 11k) dans la direction axiale.
